Europäisches Patentamt

European Patent Office

Office européen des brevets

(19)

(11) Veröffentlichungsnummer : **0 071 804**
**B1**

(12)

# EUROPÄISCHE PATENTSCHRIFT

(45) Veröffentlichungstag der Patentschrift :
21.11.85

(51) Int. Cl.⁴ : **C 10 B 39/02**

(21) Anmeldenummer : **82106415.1**

(22) Anmeldetag : **16.07.82**

(54) Verfahren und Vorrichtung zur Kühlung von heissem Schüttgut.

(30) Priorität : **01.08.81 DE 3130582**

(43) Veröffentlichungstag der Anmeldung :
**16.02.83 Patentblatt 83/07**

(45) Bekanntmachung des Hinweises auf die Patenterteilung : **21.11.85 Patentblatt 85/47**

(84) Benannte Vertragsstaaten :
**BE DE FR GB IT NL**

(56) Entgegenhaltungen :
**DE-A- 2 435 500**
**DE-A- 2 501 328**
**DE-A- 2 952 065**
**DE-C- 492 943**

(73) Patentinhaber : **Thyssen Industrie AG**
**Am Thyssenhaus 1**
**D-4300 Essen (DE)**

(72) Erfinder : **Remmers, Karl**
**Tübinger Strasse 25**
**D-4000 Düsseldorf 13 (DE)**
Erfinder : **Steinebach, Heinz, Dipl.-Ing.**
**Im Brinkmannsfeld 56**
**D-4250 Bottrop (DE)**

(74) Vertreter : **Eberhard, Friedrich, Dr.**
**Am Thyssenhaus 1**
**D-4300 Essen (DE)**

## Beschreibung

Die Erfindung bezieht sich auf ein Verfahren zur Kühlung von heißem, vorzugsweise intermittierend anfallendem stückigem Schüttgut, insbesondere von Koks, in einer Kühlanlage, die von in geschlossenem Kreislauf geführtem, in einem Wärmetauscher rückgekühltem Kühlgas durchströmt wird und die eine das heiße Schüttgut aufnehmende vertikale Kühlkammer aufweist, wobei dem Schüttgut und dem aufgeheizten Kühlgas ein Teil seines Wärmeinhaltes über von einem Teil der äußeren Schüttgutbegrenzungsfläche berührte Wasserverdampfungsflächen entzogen wird, und auf eine Kühlkammer zu seiner Durchführung.

In bekannten Kokstrockenkühlanlagen (z. B. nach DE-B 10 71 657) erfolgt die Kühlung des in einer Koksbatterie hergestellten heißen Kokses durch ein inertes Kühlgas, das durch die heiße Koksschicht geleitet wird. Es ist weiterhin bekannt (CH-PS 101 570) das Kühlgas im Kreislauf zu führen und in einem als Dampfkessel ausgebildeten Wärmetauscher rückzukühlen. In dem Kühlgaskreislauf sind außerdem zur Entfernung des Staubes Vorabscheider und Feinabscheider, sowie zur Aufrechterhaltung der Kühlgasströmung ein Gebläse vorgesehen.

Um die erstrebenswerte Dampferzeugung im Abhitzekessel und nachfolgend eine gleichmäßige Energiegewinnung zu erreichen, ist ein kontinuierlicher Betrieb der Koks-Kühlkammer erforderlich, so daß höchstens geringe Schwankungen der in der Kühlkammer dem Heißkoks entzogenen Wärmemengenrate und der Temperatur auftreten. Hierfür sind besondere Maßnahmen erforderlich.

Bei der Arbeitsweise nach DE-B 26 18 654 sollen die durch intermittierende Schüttgutzufuhr bedingten Schwankungen der Wärmemengenzufuhr kompensiert und eine Überhitzung der Anlage, insbesondere der Kesselrohre, dadurch vermieden werden, daß vom Kühlgasstrom vor dem Eintritt desselben in die vertikale Kühlkammer ein regelbarer Teilstrom abgezweigt wird, der mit dem erhitzten Kühlgasstrom vor dem Eintritt in den rückkühlenden Wärmetauscher wiedervereint wird. Die zur Durchführung vorgesehene Anlage hat parallel zur Kühlkammer eine Kurzschlußleitung, in der ein Teilstrom des kalten Kühlgases nach dem Umwälzgebläse abgezweigt und durch eine Durchmischungseinrichtung zur Regelung der Eintrittstemperatur des heißen Kühlgases in den Wärmetauscher geleitet ist. Der heiße Kühlgasstrom wird im Kopfbereich der Kühlkammer etwa in gleicher Höhe mit der Austrittsöffnung der Beschickungsschleuse abgezogen. Aufgrund der Beschickung der Kühlkammer mit einer variablen Gasmenge, wobei die Differenzmenge über die Kurzschlußleitung in die Abflußleitung für das heiße Kühlgas eingeleitet wird, soll die Eintrittstemperatur des Kühlgases in den Rückkühl-Wärmetauscher konstant auf etwa 550 bis 650 °C gehalten werden können. Dabei muß in Kauf genommen werden, daß für die Schüttgutkühlung nur eine Teilgasströmung zur Verfügung steht, jedoch die Einrichtungen im Gesamtgaskreislauf, insbesondere der Rückkühl-Wärmetauscher, die Staubabscheider, das Umwälzgebläse und die Gasleitungen entsprechend groß dimensioniert werden müssen.

Bei der Arbeitsweise nach DE-C 1 471 589 soll demgegenüber eine ausreichende Gleichmäßigkeit der aus dem Heißkoks gewonnenen Wärmemengenrate durch die Verwendung einer aus feuerfestem Mauerwerk bestehenden Kühlkammer mit zwei technologischen Zonen erreicht werden, derart, daß in einem oberen, vom Kühlgas nicht durchströmten Vorkammerteil Heißkoks bereitgehalten und erst beim Absinken in den unteren, vor dem Kühlgas im Gegenstrom beaufschlagten Kühlkammerteil bis auf die Austrittstemperatur an der Gutaustragsschleuse abgekühlt wird. Der Vorkammerteil wirkt mithin als Wärmemengen- und Temperaturpuffer. Dabei wird als nachteilig gesehen, daß die großvolumige Kühlkammer sehr kompliziert aufgebaut ist. Nach einer inneren Verschleißschicht aus feuerfestem Material folgen Schichten zur Wärmedämmung und zur Hinterfüllung gegen einen äußeren Stahlmantel. Im Innern des Mauerwerks sind Kanäle und eine Ringleitung für den Abzug des heißen Kühlgases angeordnet. Das bedingt hohe Investitionsaufwendungen und hohe Betriebskosten.

Aus DE-A 2 501 328 ist die Gewinnung von Wärmeenergie aus heißem Koks in einem vorzugsweise aus mehreren Kammern bestehenden Heißkoksbunker bekannt, in den Wärmeaustauschflächen eingebaut sind, wobei zusätzlich ein durchströmendes Inertgas einen Teil der Kokswärme übernimmt.

Bei dem bekannten Verfahren zur Trockenkühlung von Koks in einer geschlossenen Kammer nach DE-A 2 952 065 gibt der heiße Koks seine Wärme teils direkt über ein inertes Umwälzgas und teils indirekt über Kühlflächen an eine Kühlflüssigkeit ab. Die genannten Kühlflächen können von den wassergekühlten, äußeren Mantelflächen im oberen Bereich der Kühlkammer gebildet sein, wobei zusätzlich von den äußeren Mantelflächen ausgehende, zur Mittelachse der Kammer hin gerichtete Kühlfahnen vorhanden sein können. Die Gaszufuhr erfolgt im unteren Kammerbereich über turmförmige Einbauten, die mit einer zusätzlichen Kühlung ausgerüstet sein können.

Der Erfindung liegt die Aufgabe zugrunde, die bekannte Trockenkühlung von Heißkoks, bei der das aufgeheizte und rückzukühlende Kühlgas nur einen Teil der bei der Kokskühlung gewonnenen Gesamtwärmemenge enthält, dahingehend zu verbessern, daß bei hoher Wärmerückgewinnung die im Kreislauf geführte Kühlgasmenge pro Zeiteinheit niedrig gehalten werden kann.

Die Lösung nach der Erfindung besteht darin, daß dem aufgeheizten Kühlgas ein weiterer Teil seines Wärmeinhaltes innerhalb der Schüttung an schüttgutfreien, wassergespeisten Wärmeaustauschflächen entzogen wird, bevor das Kühlgas die äußere Schüttgutbegrenzungsfläche verläßt und der Rückkühlung zugeleitet wird.

Wegen der hohen Wärmekapazität und Verdampfungswärme des Wassers im Vergleich zur Wärmekapazität von Gasen ist der Wärmeentzug aus dem heißen Schüttgut mit kleiner dimensionierten Anlagen möglich. Zweckmäßig werden für die Abkühlung des Schüttgutes höchstens 12 Nanornormalkubikmeter Kühlgas pro Tonne Schüttgut und Wärmeeinheit (Joule) durch die Schüttschicht geleitet.

Zweckmäßige und vorteilhaft ausgebildete Kühlkammern zur Durchführung des Verfahrens nach der Erfindung sind Gegenstand der Unteransprüche 3 bis 9.

Nachfolgend wird die Erfindung anhand der Zeichnung mit einem Ausführungsbeispiel näher erläutert. Es zeigen :

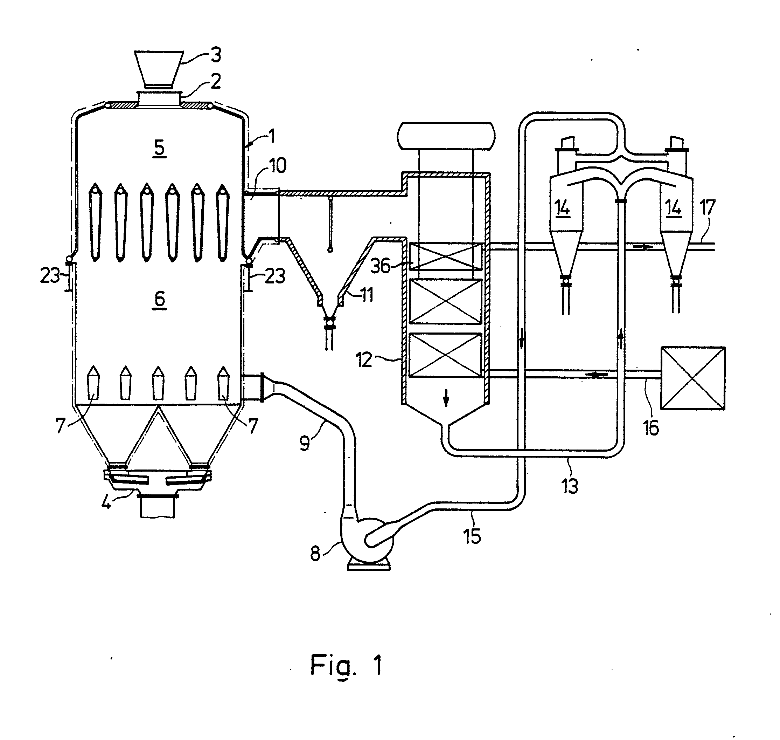

Figur 1 die Kühlanlage zur Kühlung von heißem stückigem Schüttgut,

Figur 2 als Einzelheit aus Fig. 1 die Kühlkammer in einem vertikalen Querschnitt,

Figur 3 die Kühlkammer in einem dazu senkrechten Schnitt längs der Linie III-III in Fig. 2

Figur 4 den Ausschnitt « A » aus Fig. 3 zusätzlich mit Schüttgutfüllung

Figur 5 den Ausschnitt « B » aus Fig. 2 und

Figur 6 die Einzelheit von Fig. 5 in dazu senkrechter Seitenansicht.

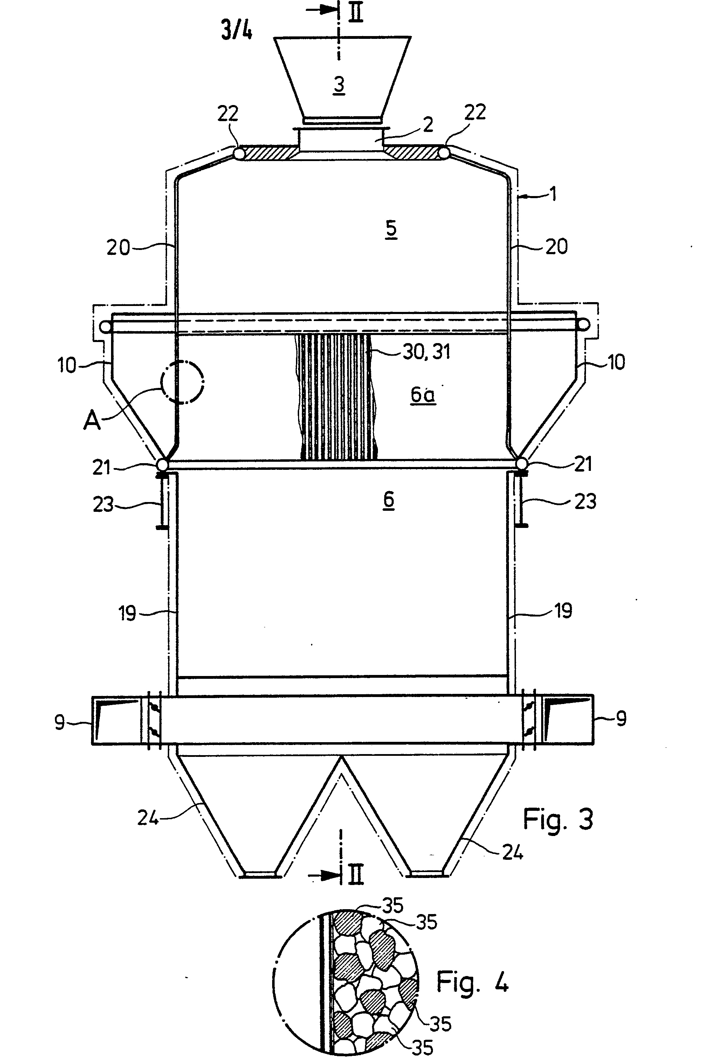

Die Kühlanlage hat eine Kühlkammer 1 über deren Beschickungsschleuse 2 das heiße Schüttgut aus dem Kübel 3 periodisch (intermittierend) eingeführt und nach dem Durchlaufen der vertikalen Kammer 1 an einer Gutaustragschleuse 4 abgekühlt entnommen wird. Die Kühlkammer hat einen oberen Vorkammerteil 5 und einen unteren Kühlteil 6, in den von unten über mehrere Düsen 7 das vom Umlaufgebläse 8 angetriebene, über die Leitung 9 zugeführte kalte inerte Kühlgas eintritt, das in der Regel aus ca. 84 % Stickstoff und ca. 14 % Kohlenmonoxyd besteht und im Rest hauptsächlich Wasserstoff und Sauerstoff enthält. Das Kühlgas heizt sich am Koks im Gegenstrom auf, wird am oberen Ende des Kühlteils 6 aus der Kühlkammer 1 herausgeführt und über eine die Kammer zangenartig umgreifende Sammelleitung 10 (Fig. 3) einem Staubvorabscheider 11 zugeführt, von dem aus das Gas einem rückkühlenden Wärmetauscher 12 (Abhitzekessel) zugeleitet wird. Das rückgekühlte Gas wird über eine Leitung 13 Zyklonen 14 zur Staubfeinabscheidung zugeführt und von dort über eine Leitung 15 zum Gebläse 8 zurückgeführt. Der rückkühlende Wärmetauscher 12 wird mit Wasser gespeist (Leitung 16) und erzeugt durch die Wärmeaufnahme hochgespannten Dampf (Leitung 17), z. B. zum Antrieb von Dampfturbinen. Im allgemeinen weist die Kühlanlage auch noch verschiedene Hilfseinrichtungen auf, wie eine Staubabsaugung in dem Vorkammerteil 5 und-

/oder der Beschickungsschleuse 2, sowie eine Reinigungseinrichtung für das Kühlgas, die jedoch der Einfachheit halber nicht dargestellt sind.

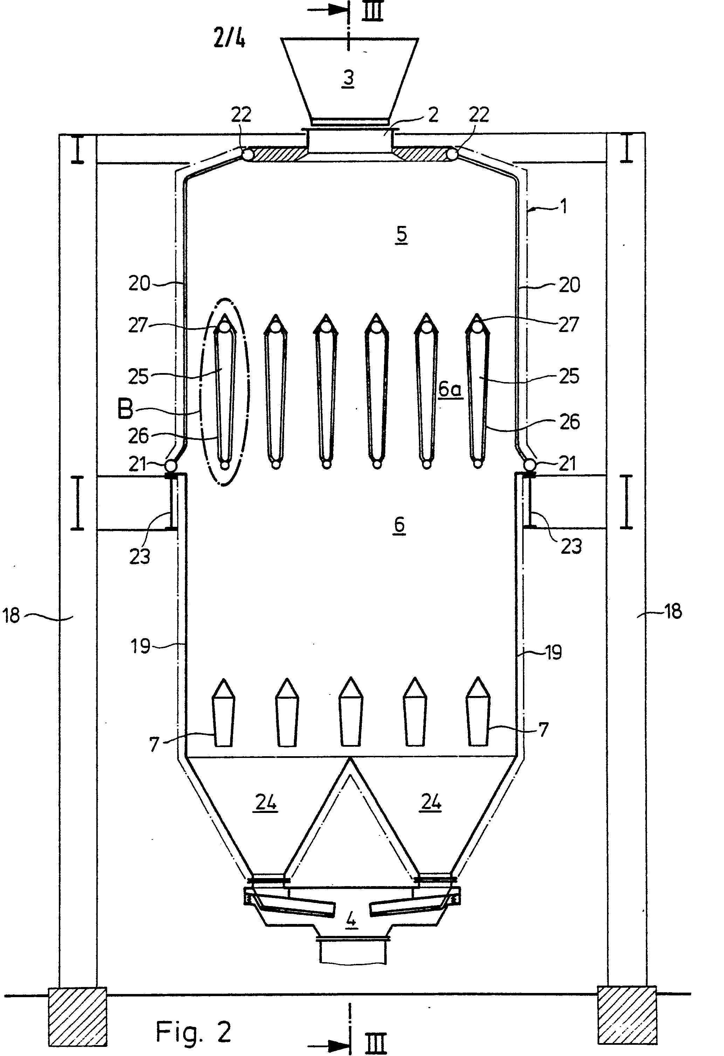

Einzelheiten des Aufbaus der vertikalen Kühlkammer 1 sind aus den Figuren 2 und 3 ersichtlich. Die von einer Stahlkonstruktion 18 mit Fundament getragene Kühlkammer 1 ist ein Stahlmantelgefäß 19, das im Bereich des Vorkammerteils 5 und im oberen Bereich 6a des Kühlteils 6 als wasserführender Wärmetauscher 20 ausgebildet ist. Dieser kann beispielsweise aus eng aneinanderliegenden, an kurzen Stegen miteinander verschweißten Rohren, sogenannten Stegrohren, bestehen. Der Wärmetauscher 20 wird über eine untere Ringleitung 21 wassergespeist und entleert über die obere Dampf/Wasser-Ringleitung 22, die ihrerseits — was in der Zeichnung nicht dargestellt ist — in die Dampftrommel 36 des rückkühlenden Wärmetauschers 12 (Abhitzekessel) mündet. Der Kühlteil 6 der Kammer 1 setzt sich unterhalb der auf dem Fundament abgestützten Träger 23 der Stahlkonstruktion 18 als einwandiges Stahlmantelgefäß 19 fort und hat im Fußbereich vier Austragtrichter 24, deren untere Öffnungen in die Gutaustragschleuse 4 münden. Strichliert angedeutet ist eine äußere Umhüllung der Kammer 1, z. B. aus mit Eisenblech abgedeckter Steinwolle, zur Wärmeisolation und Berührungsschutz.

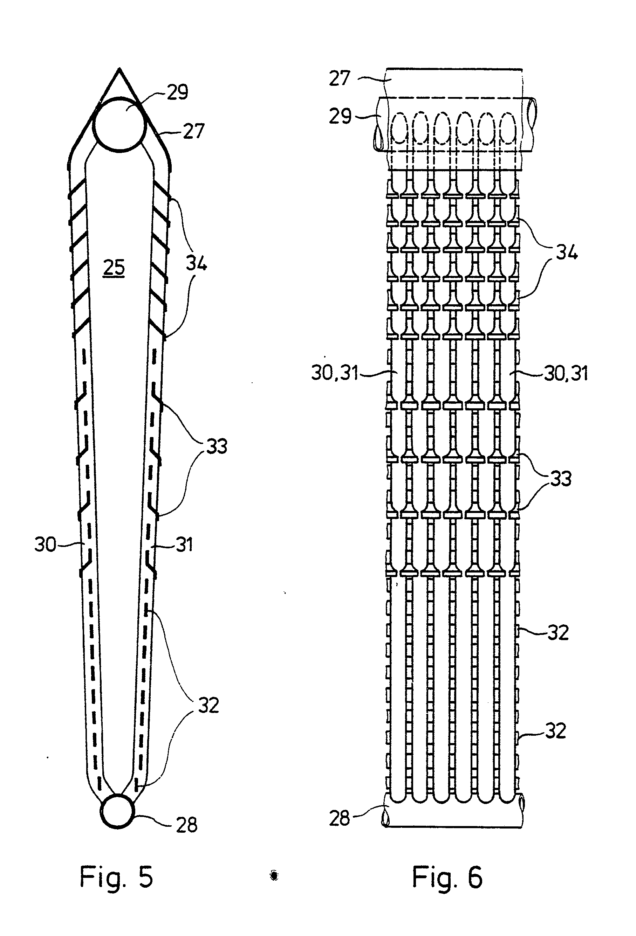

Im oberen Bereich 6a des Kühlteils 6 sind Einbauten vorhanden derart, daß dort schüttgutfreie Teilräume 25 mit käfigartigen, wasserführenden Begrenzungen 26 angeordnet sind, die oben von einem geschlossenen Haubenteil 27 abgedeckt sind. Die einzelnen käfigartig begrenzten Teilräume 25 sind zueinander parallel angeordnet und werden jeweils von einem unteren horizontalen, wasserzuleitenden, mit der Ringleitung 21 verbundenen Rohr 28 und einem oberen horizontalen, Dampf/Wasser abführenden Rohr 29 und von zwei diese beiden Rohrleitungen verbindenden Reihen annähernd vertikaler Kühlrohre 30, 31 gebildet (Fig. 3, 5 und 6). Die mehreren Dampf/Wasser abführenden Rohre 29 sind zusammengeführt und münden dann zusammen mit der oberen Ringleitung 22, — was in der Zeichnung nicht dargestellt ist — in die Dampftrommel 36 des rückkühlenden Wärmetauschers 12 (Abhitzekessel). Die einzelnen Haubenteile 27 sind in die Kühlgas-Sammelleitung 10 zusammengeführt. Der Abstand zwischen den beiden, einen Teilraum 25 bildenden Reihen der Kühlrohre 30, 31 wird nach oben hin größer. Die Kühlrohre derselben Reihe haben einen gegenseitigen Abstand unterhalb der kleinsten Korngröße des Schüttgutes, der von die Kühlrohre verbindenden Distanzstücken 32-34 überbrückt ist, wie es in den Figuren 5 und 6 im einzelnen dargestellt ist. Die unteren Distanzstücke 32 sind als ebene Bleche mit geringem Abstand ausgebildet, der jedoch dafür ausreicht, daß etwa in den Teilraum 25 gelangendes, auf Unterkorn zerriebenes Feingut dort ohne weiteres abrieseln kann. Einige mittlere Distanzstücke 33 und die oberen Distanzstücke 34 haben einen vorspringenden Fußteil, der sich nach oben und hinten verjüngt. Diese Distanzstücke stehen dadurch gegenüber der von ihrer Kühlrohrreihe gebildeten Ebene zum Schüttgut hin vor, so daß die Rohre 30, 31 einem geringeren Reibungsverschleiß unterliegen und die Gefahr des Anbackens von Schüttgut an den Rohren nicht besteht. Die Distanzstücke 32-34 ergeben infolge ihrer Formgebung und ihres unterschiedlichen Abstandes einen nach oben hin abnehmenden Strömungswiderstand für das in den betreffenden schüttgutfreien Teilraum 25 einströmende Kühlgas, was zusammen mit dem oben etwas größeren Teilraumquerschnitt den nach oben hin abfallenden Druck und das zunehmende Volumen des Kühlgases kompensiert und eine insgesamt für die Kühlung günstige Gasströmung ergibt.

Das in der Kühlkammer 1 von oben nach unten absinkende stückige Schüttgut bildet auf Grund seiner Körnung (Schüttgutbrocken 35 ; Fig. 4) eine nichtglatte äußere Begrenzungsfläche, die mit zahlreichen flächigen Berührungsstellen an Oberflächenteilen des Wärmetauschers 20 und an der Kammer 1 zugewandten Oberflächenteilen der Kühlrohre 30, 31 bzw. der Distanzstücke 32-34 anliegt, so daß infolge Wärmeleitung und -strahlung ein entsprechender Wärmeentzug direkt aus dem Schüttgut erfolgt, und zwar auch schon in dem Vorkammerteil 5. Das durch die Düsen 7 eingeleitete Kühlgas im Gegenstrom gibt einen Teil seines aus dem Schüttgut aufgenommenen Wärmeinhaltes an die gleichen Wasserverdampfungsflächen 20, 30-34 ab, soweit sie nicht im Vorkammerteil 5 angeordnet sind. Einen weiteren Teil seines Wärmeinhaltes gibt das Kühlgas an die Kühlrohre 30, 31 innerhalb der Teilräume 25 über deren schüttgutfreie Oberflächen ab, bevor es die Kühlkammer 1 über die Haubenteile 27 und die Sammelleitung 10 verläßt und nach Durchlauf des Staubvorabscheiders 11 dem rückkühlenden Wärmetauscher 12 zugeleitet wird.

Bei einer beispielhaften Kühlanlage für Heißkoks wird mit einem Zeitabstand von etwa 10 Minuten jeweils ein Kübel 3 mit rotglühendem Koks mit einer Temperatur von ca. 1 000 bis 1 050 °C in den Vorkammerteil 5 eingeschleust, dessen Volumen etwa 12 bis 15 Kübelinhalte aufzunehmen vermag. Hier findet daher schon eine beachtliche Wärmerückgewinnung über die wasserführenden Wärmetauscher 20 insbesondere auch infolge Wärmestrahlung statt. An der Gutaustragsschleuse 4 kann der beispielsweise auf ca. 180 °C abgekühlte Koks kontinuierlich abgezogen werden. Bei der entsprechenden Koksdurchsatzrate von 60 t/h durch die Kühlkammer 1 beträgt die Kühlgasmengenrate etwa 60 000 bis 70 000 Nm³/h.

Anstelle der Kühlung von heißem Koks sind auch andere körnige heiße Schüttgüter, wie Rösterze, Sintermaterialien, Kalk, Magnesit, Dolomit, oder Klinkermaterial nach der Erfindung behandelbar.

**Patentansprüche**

1. Verfahren zur Kühlung von heißem, vorzugsweise intermittierend anfallendem stückigem Schüttgut, insbesondere von Koks, in einer Kühlanlage, die von in geschlossenem Kreislauf geführtem, in einem Wärmetauscher rückgekühltem Kühlgas durchströmt wird und die eine das heiße Schüttgut aufnehmende vertikale Kühlkammer aufweist, wobei dem Schüttgut und dem aufgeheizten Kühlgas ein Teil seines Wärmeinhaltes über von einem Teil der äußeren Schüttgutbegrenzungsfläche berührte Wasserverdampfungsflächen entzogen wird, dadurch gekennzeichnet, daß dem aufgeheizten Kühlgas ein weiterer Teil seines Wärmeinhaltes innerhalb der Schüttung an schüttgutfreien, wassergespeisten Wärmeaustauschflächen entzogen wird, bevor das Kühlgas die äußere Schüttgutbegrenzungsfläche verläßt und der Rückkühlung zugeleitet wird.

2. Verfahren nach Anspruch 1, dadurch gekennzeichnet, daß für die Abkühlung des Schüttgutes höchstens 12 Nanonormalkubikmeter Kühlgas pro Tonne Schüttgut und Wärmeeinheit (Joule) durch die Schüttschicht geleitet werden.

3. Kühlkammer zur Durchführung des Verfahrens nach den Ansprüchen 1 oder 2, die einen mit einer Beschickungsschleuse (2) versehenen oberen Vorkammerteil (5) und einen nach unten sich anschließenden Kühlteil (6 ; 6a) mit einer Gutaustragschleuse (4) hat, wobei die Gasabzugseinrichtung (Hauben 27 mit Sammelleitung 10) zwischen Vorkammerteil und Kühlteil und die Gaszuführungseinrichtung (Düsen 7 mit Leitung 9) im unteren Bereich des Kühlteils (6) angeordnet und im oberen Bereich (6a) des Kühlteils (6) wassergespeiste Wärmeaustauschflächen (20) vorhanden sind, dadurch gekennzeichnet, daß in Innern des oberen Kühlteilraumes (6a) wassergespeites Wärmetauscher (30, 31) ausgebildet sind, die schüttgutfreie Wärmeaustauschflächen aufweisen.

4. Kühlkammer nach Anspruch 3, dadurch gekennzeichnet, daß die Wärmetauscher schüttgutfreie Teilräume (25) im Innern des oberen Kühlteilraumes (6a) ausbilden mit käfigartigen, wasserführenden Begrenzungen (26), durch die das Kühlgas aus dem Schüttgut kommen in die Teilräume eintritt, und daß der Kopfbereich der käfigartigen Begrenzungen (26) von einem nach oben geschlossenen, Kühlgas sammelnden und abführenden Haubenteil (27) abgedeckt ist.

5. Kühlkammer nach Anspruch 4, dadurch gekennzeichnet, daß die einzelnen käfigartig begrenzten Teilräume (25) zueinander parallel angeordnet sind und jeweils gebildet werden von einem unteren, horizontalen wasserzuleitenden Rohr (28), einem oberen, horizontalen wasserabführenden Rohr (29) und von zwei diese beiden Rohrleitungen verbindenden Reihen annähernd vertikaler Kühlrohre (30, 31), wobei die mehreren wasserabführenden Rohre (29) über eine gemeinsame Leitung an den Dampfkessel des rückkühlenden Wärmetauschers (12) angeschlossen sind.

6. Kühlkammer nach Anspruch 5, dadurch gekennzeichnet, daß der Abstand zwischen den beiden, einen Teilraum (25) bildenden Reihen der Kühlrohre (30, 31) nach oben hin zunimmt.

7. Kühlkammer nach Anspruch 5 oder 6, dadurch gekennzeichnet, daß die Kühlrohre (30 bzw. 31) derselben Reihe mittels Distanzstücken (32-34) einen Abstand unterhalb der kleinsten Korngröße des Schüttgutes haben.

8. Kühlkammer nach Anspruch 7, dadurch gekennzeichnet, daß die Distanzstücke (32-34) derart ausgebildet und/oder angeordnet sind, daß sie nach oben hin für den Kühlgasstrom einen abnehmenden Strömungswiderstand bilden.

9. Kühlkammer nach Anspruch 7 oder 8, dadurch gekennzeichnet, daß die Distanzstücke (33, 34) zum Schüttgut hin gegenüber der Ebene vorstehen, die von ihrer Kühlrohr (30 bzw. 31)-Reihe gebildet wird.

**Claims**

1. Method for the cooling of hot bulk material in piece or lump form which is preferably produced intermittently, especially coke, in a cooling plant through which flows cooling gas conducted through a closed circuit and re-cooled in a heat exchanger, and which comprises a vertical cooling chamber accommodating the hot bulk material, a fraction of its heat content being taken from the bulk material and from the heated cooling gas by means of water evaporation surfaces contacted by a portion of the outer bulk material boundary surface, characterised in that a further fraction of its heat content is taken from the heated cooling gas within the bulk material bed at water-fed heat exchange surfaces which are free of bulk material, before the cooling gas issues from the outer bulk material boundary surface and is conducted to the recooling stage.

2. Method according to claim 1, characterised in that at the most 12 standard cubic nanometres of cooling gas per tonne of bulk material and heat unit (joule) are conducted through the bulk material bed for the cooling of the bulk material.

3. Cooling chamber for carrying out the method according to claims 1 or 2, which has an antechamber part (5) at the top provided with a feed air lock (2), and a cooling part (6 ; 6a) which is a downward continuation and which is provided with a material discharge air lock (4), the gas extracting apparatus (hoods 27 with collecting conduit 10) being between antechamber part and cooling part, and the gas feed apparatus (nozzles 7 with conduit 9) being in the lower region of the cooling part (6), and water-fed heat exchange surfaces (20) are arranged in the upper region (6a) of the cooling part (6), characterised in that waterfed heat exchangers (30, 31) which have heat exchange surfaces free of bulk material are constructed in the interior of the upper cooling part region (6a).

4. Cooling chamber according to claim 3, characterized in that the heat exchangers form compartments (25) free of bulk material in the interior of the upper cooling part region (6a), with cage-like water-conducting boundary elements (26) through which the cooling gas coming from the bulk material enters the compartments, and that the head region of the cage-like boundary elements (26) is covered by a hood part (27) which is closed at the top and which collects and discharges cooling gas.

5. Cooling chamber according to claim 4, characterised in that the individual compartments (25) with cage-like boundary elements are arranged parallel to one another and are formed in each case by a lower horizontal water-introducing conduit (28), an upper, horizontal, water-discharging conduit (29), and two rows of approximately vertical cooling tubes (30, 31) connecting the said two conduits, the several water-discharging conduits (29) being connected via a common conduit to the steam boiler of the recooling heat exchanger (12).

6. Cooling chamber according to claim 5, characterised in that the spacing between the two rows of cooling tubes (30, 31) forming a compartment (25) increases in the upward direction.

7. Cooling chamber according to claim 5 or 6, characterised in that the cooling tubes (30 or 31) of the same row are given, by means of spacer elements (32-34), a spacing less than the smallest piece size of the bulk material.

8. Cooling chamber according to claim 7, characterized in that the spacer elements (32-34) are so cosntructed and/or arranged that they form a resistance to flow for the stream of cooling gas which decreases in the upward direction.

9. Cooling chamber according to claim 7 or 8, characterised in that the spacer elements (33, 34) project towards the bulk material relatively to the plane formed by their cooling tube (30 or 31 respectively) row.

**Revendications**

1. Procédé de refroidissement de matière en vrac, en morceaux, chaude, produite de préférence par intermittence, en particulier de coke, dans une installation de refroidissement qui est parcourue par un gaz de refroidissement circulant en circuit fermé et refroidi en retour dans un échangeur de chaleur et qui présente une chambre verticale de refroidissement recevant la matière en vrac, chaude, une partie de la chaleur de la matière en vrac et du gaz de refroidissement échauffé étant extraite de ceux-ci par l'intermédiaire de surfaces d'évaporation d'eau touchées par une partie de la surface limite extérieure de la matière en vrac, caractérisé par le fait qu'une autre partie de la chaleur du gaz de refroidissement échauffé est extraite de celui-ci au sein de la charge des surfaces d'échange de chaleur dépourvues de matière en vrac et alimentées en eau, avant que le gaz de refroidissement quitte la surface limite extérieure de la matière en vrac et soit conduit au refroidissement de retour.

. 2. Procédé selon la revendication 1, caractérisé par le fait que pour le refroidissement de la matière en vrac, on fait passer à travers la charge au plus 12 nanomètres cubes normaux de gaz de refroidissement par tonne de matière en vrac et par unité de chaleur (joule).

3. Chambre de refroidissement pour la mise en œuvre du procédé selon l'une des revendications 1 et 2, comportant une partie préchambre supérieure (5) pourvue d'une écluse de chargement (2) et une partie de refroidissement (6, 6a) faisant suite à celle-ci vers le bas et pourvue d'une écluse de déchargement (4), le dispositif d'évacuation de gaz (hottes 27 avec conduite collectrice 10) étant placé entre la partie préchambre et la partie de refroidissement et le dispositif d'amenée de gaz (tuyères 7 avec conduite 9) placé dans la zone inférieure de la partie de refroidissement (6), et des surfaces d'échange de chaleur alimentées en eau (20) existant dans la zone supérieure (6a) de la partie de refroidissement (6), caractérisée par le fait que dans la zone supérieure (6a) de la partie de refroidissement sont faits des échangeurs de chaleur alimentés en eau (30, 31) qui présentent des surfaces d'échange de chaleur dépourvues de matière en vrac.

4. Chambre de refroidissement selon la revendication 3, caractérisée par le fait que les échangeurs de chaleur forment dans la zone supérieure (6a) de la partie de refroidissement des espaces partiels dépourvus de matière en vrac (25) ayant des limites du genre cage (26) conduisant l'eau par lesquelles le gaz de refroidissement, venant de la matière en vrac, entre dans les espaces partiels, et que la zone de tête de ces limites du genre cage (26) est couverte par une partie hotte (27) fermée en haut qui recueille et évacue le gaz de refroidissement.

5. Chambre de refroidissement selon la revendication 4, caractérisée par le fait que les espaces partiels (25) à limites du genre cage sont disposés parallèlement et formés chacun par un tube inférieur horizontal (28) amenant l'eau, un tube supérieur horizontal (29) évacuant l'eau et deux rangées de tubes de refroidissement approximativement verticaux (30, 31) réunissant ces deux tubes, les différents tubes (29) évacuant l'eau étant reliés par une conduite commune à la chaudière à vapeur de l'échangeur de chaleur de refroidissement de retour (12).

6. Chambre de refroidissement selon la revendication 5, caractérisée par le fait que la distance entre les deux rangées de tubes de refroidissement (30, 31) formant un espace partiel (25) augmente vers le haut.

7. Chambre de refroidissement selon l'une des revendications 5 et 6, caractérisée par le fait que les tubes de refroidissement (30 ou 31) de la même rangée ont par des entretoises (32 à 34) un intervalle inférieur à la plus petite grosseur de grain de la matière en vrac.

8. Chambre de refroidissement selon la revendication 7, caractérisée par le fait que les entretoises (32 à 34) sont agencées et/ou placées de façon à créer vers le haut pour le courant de gaz de refroidissement une résistance à l'écoulement décroissante.

9. Chambre de refroidissement selon l'une des revendications 7 et 8, caractérisée par le fait que les entretoises (33, 34) saillent vers la matière en vrac du plan formé par leur rangée de tubes de refroidissement (30 ou 31).

Fig. 1

Fig. 2

0 071 804

Fig. 3

Fig. 4

Fig. 5

Fig. 6